(19) **Europäisches Patentamt**

**European Patent Office**

**Office européen des brevets**

(11) **EP 1 574 417 B1**

(12) **FASCICULE DE BREVET EUROPEEN**

(45) Date de publication et mention
de la délivrance du brevet:
**11.10.2006 Bulletin 2006/41**

(51) Int Cl.:
***B62D 5/04*** *(2006.01)*     ***B62D 6/00*** *(2006.01)*

(21) Numéro de dépôt: **05290430.7**

(22) Date de dépôt: **24.02.2005**

(54) **Dispositif d'assistance électrique de direction de véhicule automobile, ensemble de direction pourvu d'un tel dispositif et véhicule automobile équipé d'un tel ensemble**

Elektrische Servolenkeinrichtung für ein Kraftfahrzeug, Lenkanordnung mit einer solchen Servolenkeinrichtung und mit einer solchen Lenkanordnung ausgerüstetes Kraftfahrzeug

Electric power steering apparatus for an automotive vehicle, steering assembly having such an apparatus and automotive vehicle equipped with such an assembly

(84) Etats contractants désignés:
**AT BE BG CH CY CZ DE DK EE ES FI FR GB GR HU IE IS IT LI LT LU MC NL PL PT RO SE SI SK TR**

(30) Priorité: **11.03.2004 FR 0402551**

(43) Date de publication de la demande:
**14.09.2005 Bulletin 2005/37**

(73) Titulaire: **Peugeot Citroën Automobiles S.A.**
**78140 Vélizy Villacoublay (FR)**

(72) Inventeur: **Bernede, Dominique**
**92190 Meudon (FR)**

(74) Mandataire: **Domenego, Bertrand et al**
**Cabinet Lavoix**
**2, place d'Estienne d'Orves**
**75441 Paris Cedex 09 (FR)**

(56) Documents cités:
**EP-A- 1 142 746          FR-A- 2 837 161**
**US-A- 5 659 473          US-A1- 2003 106 736**

**Description**

La présente invention se rapporte à un dispositif d'assistance électrique de direction de véhicule automobile.

Elle concerne plus précisément un dispositif d'assistance du type divulgué par le document FR2837161, c'est à dire comprenant :

- un moteur électrique dont l'arbre de sortie est destiné à être relié à l'arbre de direction du véhicule, de façon à fournir une assistance au braquage du volant en exerçant sur l'arbre de direction un couple d'assistance, un effort de braquage résultant étant transmis à des roues directrices par l'intermédiaire d'un mécanisme d'orientation,
- un premier capteur mesurant un premier paramètre de fonctionnement du véhicule, significatif du couple-volant appliqué sur l'arbre de direction,
- un deuxième capteur mesurant un deuxième paramètre de fonctionnement et/ou d'état du véhicule, et
- un organe de calcul ayant au moins une première et une deuxième entrées, reliées respectivement au premier et au deuxième capteurs, et ayant une sortie reliée au moteur électrique et délivrant à ce dernier un signal de consigne de couple d'assistance représentatif d'une valeur calculée en appliquant aux valeurs d'entrée des lois de commande pré-enresgistréés.

On connaît dans l'état de la technique de tels dispositifs d'assistance, comprenant une boucle de régulation dont la variable de contrôle est constituée par le couple-volant. Les lois de commande pré-enregistrées dans l'organe de calcul sont prévues pour calculer la valeur de consigne de couple en fonction des valeurs des paramètres d'entrée, dont la valeur de couple-volant, filtrée ou non.

On a constaté que dans les dispositifs d'assistance connus, quel que soit le soin apporté à l'élaboration des lois de commande, les « retours d'information » de la chaussée et les « remontées de direction » n'étaient pas maîtrisés.

Par « retours d'information », on entend les sollicitations fréquentielles provenant de la route, transmises au conducteur par l'intermédiaire des roues et de la colonne de direction, qui permettent au conducteur de ressentir une perte d'adhérence ou une dégradation de la chaussée, et ainsi d'adapter son mode de conduite. Ces sollicitations, qu'il est souhaitable de transmettre au conducteur avec un niveau d'amplitude suffisant, ont des fréquences principalement estimées entre 0 et 10 Hz.

Par « remontées de direction », on entend les sollicitations séquentielles constituant des perturbations inutiles pour le conducteur. Ces sollicitations, qui ont des fréquences principalement estimées entre 10 et 20 Hz, doivent être filtrées par l'ensemble de direction pour un agrément de conduit amélioré.

Certaines études ont montré que les sollicitations fréquentielles cheminant par la colonne de direction, depuis les roues directrices jusqu'au conducteur, ne constituent pas des signaux d'amplitude significative lorsque leur fréquence est supérieure à 20 Hz, de sorte qu'elles ne sont pas perçues par le conducteur, et ne nécessitent pas de traitement particulier.

L'invention a pour but de remédier à l'inconvénient ci-dessus, c'est-à-dire de proposer un dispositif d'assistance tel qu'exposé précédemment, qui permette, à faible coût, un retour d'information par la colonne de direction, tout en éliminant ou en atténuant de façon drastique les remontées de direction.

Cet objectif est atteint par le dispositif d'assistance conforme à l'invention, du fait qu'il comprend en outre des moyens pour atténuer, respectivement amplifier, de façon sélective, dans des plages de fréquence prédéterminées, les phénomènes vibratoires sur le couple-volant, lesdits moyens fonctionnant par traitement du signal transmis à la première entrée de l'organe de calcul.

Suivant d'autres caractéristiques du dispositif conforme à l'invention :

- lesdits moyens sont adaptés pour atténuer les phénomènes vibratoires sur le couple-volant dans des fréquences supérieures à une valeur de seuil prédéterminée ;
- ladite valeur de seuil est comprise entre 8 et 14 Hz, de préférence égale à 10 Hz ;
- lesdits moyens comprennent un circuit de traitement de signal dont l'entrée est reliée au premier capteur et la sortie est reliée à la première entrée de l'organe de calcul, ledit circuit appliquant au signal d'entrée représentatif de la valeur de couple-volant mesurée, une fonction de transfert de la forme

$$H(f) = \frac{\sum\limits_{i=n}^{i=n} b_i f^i}{\sum\limits_{i=n}^{i=n} a_i f^i} \quad ,$$

où f est la fréquence, n est un entier supérieur ou égal à 3,
et dans laquelle les coefficients $a_i$, $b_i$ sont choisis de telle façon que la fonction de transfert, ayant pour entrée l'effort résultant appliqué au mécanisme d'orientation et pour sortie le couple-volant, présente une courbe de Bode représentative suivant laquelle :

. dans une plage de fréquence comprise entre 0 et ladite valeur de seuil, le gain varie avec la fréquence entre une valeur basse et une valeur haute de gain constantes,
. pour des fréquences supérieures à ladite valeur de seuil, le gain varie avec la fréquence, en restant inférieur à une valeur maximale variant elle-même linéairement avec la fréquence de façon décroissante, selon une pente prédéterminée, non nulle, à partir de ladite valeur haute ; et

- les coefficients $a_i$, $b_i$ sont choisis de telle façon que la fonction de transfert, ayant pour entrée l'effort résultant appliqué au mécanisme d'orientation et pour sortie le couple-volant, présente une courbe de Bode représentative de phase suivant laquelle :

. dans la plage de fréquence comprise entre 0 et ladite valeur de seuil, la phase varie avec la fréquence entre une valeur basse de phase strictement inférieure à 0 et une valeur haute de phase, inférieure ou égale 0, de préférence nulle,
. pour des fréquences supérieures à ladite valeur de seuil, la phase reste inférieure à ladite valeur haute de phase.

L'invention vise en outre un ensemble de direction de véhicule automobile, comprenant un arbre de direction, un dispositif d'assistance électrique tel que décrit précédemment, relié à l'arbre de direction de façon à fournir une assistance au braquage du volant en exerçant sur l'arbre de direction un couple d'assistance, un mécanisme d'orientation relié à l'arbre de direction et au dispositif d'assistance, et par l'intermédiaire duquel est transmis un effort résultant de braquage à des roues directrices.

L'invention vise enfin un véhicule automobile comportant un ensemble de direction tel que décrit précédemment.

Un mode particulier de réalisation de l'invention va maintenant être décrit plus en détail, en référence aux dessins annexés, sur lesquels :

- la Figure 1 est une vue schématique d'un ensemble de direction de véhicule, comportant un dispositif d'assistance suivant l'invention ;
- la Figure 2 est un diagramme de Bode représentant le gain, de la fonction de transfert couple-volant/effort crémaillère, qui montre le domaine de fonctionnement-cible du dispositif conforme à l'invention, et un exemple de courbe caractéristique-cible située à l'intérieur de ce domaine ; et
- la Figure 3 est un diagramme analogue à celui de la Figure 2, représentant la phase de la même fonction de transfert.

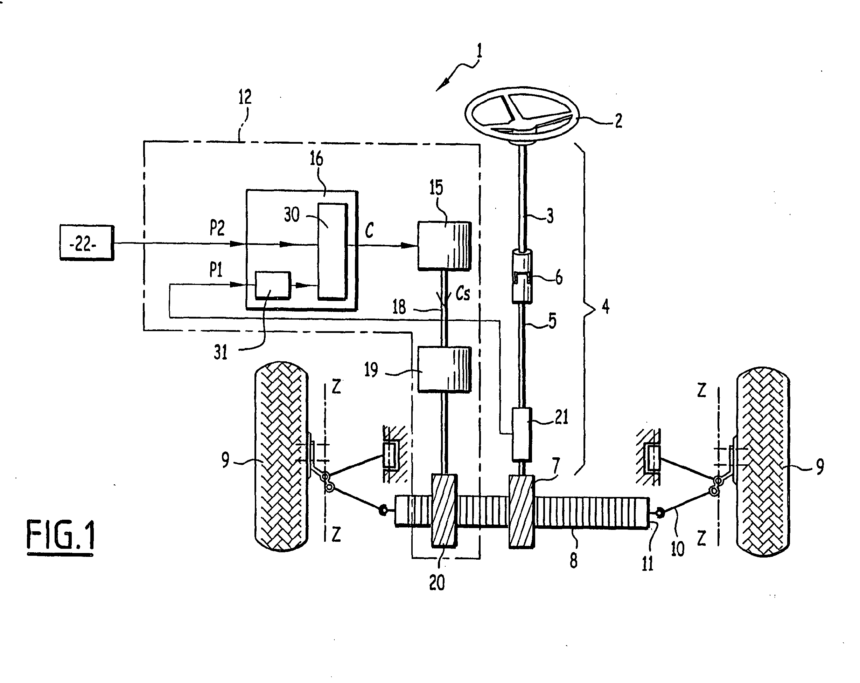

Sur la Figure 1, on a représenté un ensemble de direction 1 de véhicule automobile assisté électriquement, qui comporte un volant 2 solidaire d'un premier tronçon 3 d'un arbre de direction 4, par l'intermédiaire d'une liaison à cardan 6. L'arbre de direction 4 transmet le couple appliqué sur le volant 2 par le conducteur du véhicule à un pignon de transmission 7, qui engrène avec une crémaillère 8 disposée transversalement par rapport à l'axe du véhicule entre deux roues directrices 9. Le pignon de transmission 7 pourrait être remplacé par tout autre organe de transmission, comme par exemple une vis sans fin. Chaque roue directrice 9 est susceptible de pivoter autour d'un axe de pivotement vertical Z-Z sous l'effet d'un déplacement linéaire de la crémaillère 8, ladite roue directrice 9 étant actionnée par un mécanisme d'orientation comportant la crémaillère et une biellette 10 reliée à une extrémité 11 de la crémaillère 8.

L'ensemble de direction 1 comprend également un dispositif d'assistance 12 destiné à exercer sur la crémaillère 8 un effort de même sens que l'effort exercé par le pignon de transmission 7, de façon à faciliter l'actionnement du volant 2 par le conducteur du véhicule, en fonction d'au moins deux paramètres P1, P2 de fonctionnement de la direction, ou plus généralement de fonctionnement et/ou d'état du véhicule.

Le dispositif d'assistance 12 comprend un moteur électrique 15 dont le couple de sortie $C_s$ est commandé par un dispositif électronique de commande 16 qui délivre au moteur une consigne de couple d'assistance C. Le couple de sortie $C_s$ du moteur électrique 15 est transmis à un réducteur 19 par l'intermédiaire de l'arbre de sortie 18 du moteur 15, et à un pignon d'assistance 20 engrenant avec la crémaillère 8.

Ainsi, l'arbre de sortie 18 du moteur électrique 15 est relié mécaniquement à l'arbre de direction 4, par l'intermédiaire du réducteur 19, du pignon d'assistance 20, de la crémaillère 8 et du pignon de transmission 7. La liaison mécanique de l'arbre de sortie 18 et de l'arbre de direction 4 pourrait être différente, notamment plus directe en n'impliquant pas la crémaillère 8.

L'arbre de sortie 18 du moteur électrique fournit une assistance au braquage du volant 2 en exerçant sur l'arbre de direction 4, par l'intermédiaire des éléments mécaniques cités précédemment, un couple d'assistance dépendant directement du couple de sortie $C_s$, et par conséquent de la consigne de couple d'assistance C.

Le premier paramètre $P_1$ est significatif du couple-volant, c'est-à-dire du couple appliqué sur le volant 2 par le conducteur et/ou subi par ce dernier. Le couple-volant est par exemple estimé au moyen d'un capteur de couple 21, monté sur le deuxième tronçon 5 de l'arbre de direction 4, dans une région proche du pignon 7. Ce paramètre est significatif de conditions de maintien du volant, mais également des phénomènes vibratoires prenant naissance au niveau de la liaison au sol, et transmis au conducteur via les roues, les biellettes, la crémaillère et la colonne de direction.

Le deuxième paramètre $P_2$ est par exemple significatif de la valeur de vitesse du véhicule. Celle-ci est déterminée par des moyens classiques de mesure de la vitesse d'avance, présents usuellement sur les véhicules, que l'on désignera par un capteur de vitesse d'avance 22.

Le dispositif électronique de commande 16 comprend essentiellement un calculateur 30 à deux entrées et une sortie, et un circuit de traitement de signal 31.

Le circuit 31 est relié à la sortie du capteur de couple-volant 21, de façon à recevoir en entrée un signal représentatif du paramètre $P_1$ de couple-volant, et sa sortie est connectée à la première entrée du calculateur 30.

Le circuit 31 est représenté par sa fonction de transfert H (f), où f est la fréquence du signal d'entrée représentatif de $P_1$. Cette fonction de transfert sera précisée ultérieurement.

Ainsi, le calculateur 30 reçoit sur sa première entrée un signal représentatif du paramètre $P_1$ de couple-volant, transformé conformément à la fonction de transfert H(f) du circuit 31.

Le calculateur 30 est d'autre part relié en entrée au capteur de vitesse 22, de sorte que la deuxième entrée du calculateur 30 est alimentée par le signal représentatif du paramètre $P_2$ de vitesse du véhicule.

Le calculateur 30 est programmé pour exécuter des lois de commande pré-enregistrées, par exemple sous la forme de cartographies, et pour délivrer en sortie un signal représentatif de la valeur de couple de consigne d'assistance C, en fonction des deux valeurs d'entrée. La sortie du calculateur 30 est reliée au moteur 15 afin de lui délivrer ce signal de commande, représentatif de la valeur de couple de consigne ainsi calculé.

Naturellement, le calculateur 30 et les lois de commande qui lui sont associées peuvent être prévus pour fonctionner avec un nombre de paramètres d'entrée supérieurs à deux, notamment trois valeurs d'entrée.

Le calcul du couple de consigne peut alors prendre en compte un autre paramètre de fonctionnement et/ou d'état du véhicule, tel qu'un paramètre significatif de la vitesse de rotation du volant.

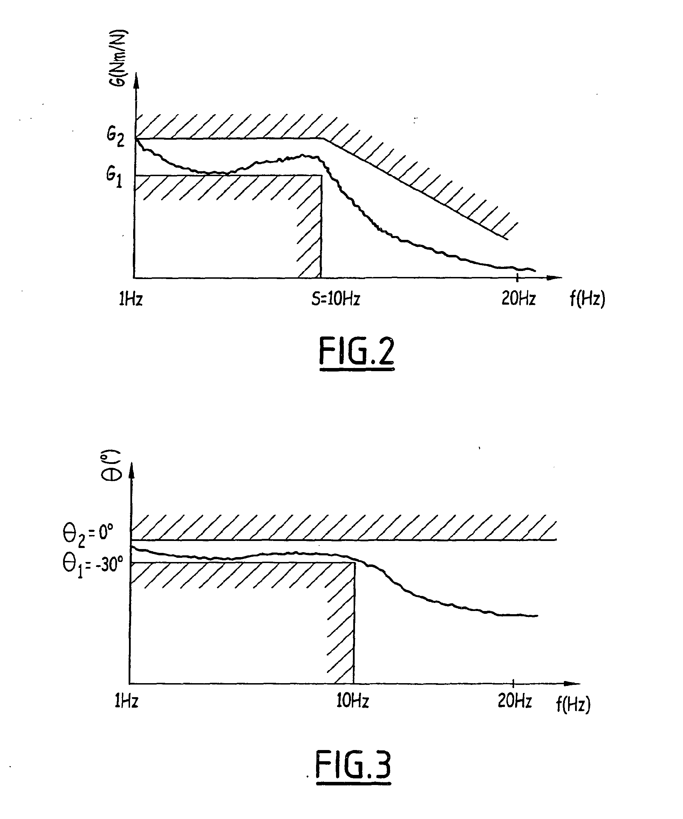

On va à présent expliciter davantage la fonction de transfert H(f) et, en référence aux Figures 2 et 3, on illustrera les effets physiques du traitement du signal ainsi opéré sur le paramètre de couple-volant $P_1$ à l'entrée du calculateur 30.

Sur les Figures 2 et 3, on a en effet traduit graphiquement les objectifs de l'invention consistant à atténuer, respectivement amplifier, de façon analogue, dans des plages de fréquence prédéterminées, les phénomènes vibratoires sur le couple-volant.

Comme indiqué précédemment, ces phénomènes vibratoires « remontent » de la route vers le conducteur par les biellettes 10, la crémaillère 8, la colonne de direction 4 et le volant 2. L'effet vibratoire ressenti par le conducteur peut être traduit, comme cela a été fait dans le cadre de l'invention, par la fonction de transfert T(f) égale au rapport des valeurs algébriques du couple-volant et de l'effort appliqué par les roues directrices 9 sur la crémaillère 8, via les biellettes 10. Cette fonction de transfert est associée à un système mécanique transmettant des vibrations entre une entrée -les roues- et une sortie - le volant-.

Les objectifs de l'invention ont été traduits par un domaine de fonctionnement-cible dans lequel doit se situer la courbe caractéristique de la fonction de transfert T(f). La fonction de transfert ainsi définie modifie le gain et la phase du transfert Efforts biellettes (entrée) vers le couple-volant (sortie). Sur les Figures 2 et 3, ces domaines ont été délimités pour le gain et pour la phase de la fonction de transfert, respectivement.

Pour l'un et l'autre des domaines de fonctionnement, en gain et en phase, on distingue deux plages de fréquence :

- la première comprise entre 0 et une valeur de seuil S prédéterminée, comprise entre 8 et 14 Hz, de préférence égale à 10 Hz (comme indiqué sur les Figures) ;
- la deuxième correspondant à des fréquences supérieures à cette valeur de seuil S.

Sur les Figures, la première plage de fréquence a été limitée à l'intervalle [1 Hz, 10 Hz], et la deuxième a été limitée à l'intervalle [10 Hz, 20 Hz], ces intervalles étant estimés comme les plus importants dans le cadre de l'invention.

Le domaine de fonctionnement en gain se situe :

- pour la première plage de fréquence [0,S], qui correspond principalement à une plage d'amplification : entre la ligne droite horizontale à gain constant $G_1$, et la ligne droite horizontale à gain constant $G_2$, où $G_1$ est inférieur à $G_2$, $G_1$ étant la valeur basse de gain et $G_2$ étant la valeur haute de gain ;
- pour la deuxième plage de fonctionnement, correspondant aux valeurs de fréquence supérieures à S et principalement à une plage d'atténuation : au-dessous d'une droite de pente (P) non nulle, négative, passant par le point

de coordonnées (S, $G_2$).

Concernant la phase θ de la fonction de transfert T (f), le domaine de fonctionnement est défini de la façon suivante :

- pour la première plage de fonctionnement [0,S] : le domaine de fonctionnement est compris entre les deux lignes horizontales à phase constante, correspondant respectivement à une valeur basse $\theta_1$ et à une valeur haute $\theta_2$, avec $\theta_1 < \theta_2 \leq 0$. On prendra de préférence $\theta_2 = 0$ et $\theta_1 = -30°$ ;
- pour la deuxième plage de fonctionnement, correspondant aux valeurs de fréquence supérieures à S : le domaine de fonctionnement se situe au-dessous de la ligne droite horizontale à phase constante $\theta_2$.

Pour obtenir les caractéristiques désirées de la fonction de transfert T (f), c'est-à-dire pour que les courbes de Bode caractéristiques de cette fonction de transfert se situent à l'intérieur des domaines de fonctionnement définis ci-dessus, il s'est avéré que la fonction de transfert H(f) associée au circuit 31 pouvait être avantageusement de la forme suivante :

$$ H~(f) ~=~ \frac{\sum_{i=n}^{i=n} b_i f^i}{\sum_{i=n}^{i=n} a_i f^i} \quad , $$

où n est un entier ≥ 3, et où les coefficients $a_i$ et $b_i$ sont choisis pour chaque type de véhicule, et pour chaque ensemble de valeurs définissant les domaines de fonctionnement recherchés, à savoir S, $G_1$, $G_2$, P, $\theta_1$, et $\theta_2$.

Ces domaines de fonctionnement peuvent être définis pour plusieurs conditions-types. Les domaines de fonctionnement qui ont été représentés sur les Figures ont par exemple été définis pour un véhicule particulier, et pour une intensité d'efforts appliqués sur la crémaillère variant entre -50 daN et +50 daN, en condition de volant bloqué.

Il est important de noter que la fonction d'atténuation-amplification des filtrage des vibrations transitant par la colonne de direction est réalisée par des moyens électroniques de traitement de signal agissant sur une variable de régulation, qui est ici le couple-volant. L'apport de ces moyens électroniques de traitement dans les dispositifs d'assistance électrique, et plus généralement dans les ensembles de direction existant actuellement, ne représente aucun surcoût significatif. En particulier, la fonction d'atténuation/amplification des vibrations par les moyens définis dans l'invention n'implique aucun moyen mécanique ou électromécanique additionnel.

En outre, l'invention peut être adaptée à un grand nombre de directions assistées électriques existantes.

La fonction d'atténuation/amplification des vibrations transitant par la colonne de direction, dans les conditions exposées dans la description qui précède, permet d'atteindre un haut niveau de sécurité ainsi qu'un haut niveau d'agrément de conduite.

**Revendications**

1. Dispositif d'assistance électrique de direction de véhicule automobile, comprenant :

   - un moteur électrique (15) dont l'arbre de sortie (18) est destiné à être relié à l'arbre de direction (4) du véhicule, de façon à fournir une assistance au braquage du volant (2) en exerçant sur l'arbre de direction (4) un couple d'assistance, un effort de braquage résultant étant transmis à des roues directrices par l'intermédiaire d'un mécanisme d'orientation (10, 11),
   - un premier capteur (21) mesurant un premier paramètre ($P_1$) de fonctionnement du véhicule, significatif du couple-volant appliqué sur l'arbre de direction (4),
   - un deuxième capteur (22) mesurant un deuxième paramètre ($P_2$) de fonctionnement et/ou d'état du véhicule, et
   - un organe de calcul (30) ayant au moins une première et une deuxième entrées, reliées respectivement au premier (21) et au deuxième (22) capteurs, et ayant une sortie reliée au moteur électrique (15) et délivrant à ce dernier un signal de consigne de couple d'assistance (C) représentatif d'une valeur calculée en appliquant aux valeurs d'entrée des lois de commande pré-enresgistrées,

   **caractérisé en ce qu'**il comprend en outre des moyens (31) pour atténuer, respectivement amplifier, de façon sélective, dans des plages de fréquence prédéterminées, les phénomènes vibratoires sur le couple-volant, lesdits moyens (31) fonctionnant par traitement du signal transmis à la première entrée de l'organe de calcul (30).

2. Dispositif suivant la revendication 1, **caractérisé en ce que** lesdits moyens (31) sont adaptés pour atténuer les phénomènes vibratoires sur le couple-volant dans des fréquences supérieures à une valeur de seuil (S) prédéterminée.

3. Dispositif suivant la revendication 2, **caractérisé en ce que** ladite valeur de seuil (S) est comprise entre 8 et 14 Hz, de préférence égale à 10 Hz.

4. Dispositif suivant la revendication 2 ou 3, **caractérisé en ce que** lesdits moyens (31) comprennent un circuit (31) de traitement de signal dont l'entrée est reliée au premier capteur (21) et la sortie est reliée à la première entrée de l'organe de calcul (16), ledit circuit appliquant au signal d'entrée représentatif de la valeur de couple-volant mesurée, une fonction de transfert de la forme

$$H(f) = \frac{\sum\limits_{i=n}^{i=n} b_i f^i}{\sum\limits_{i=n}^{i=n} a_i f^i} \quad ,$$

où f est la fréquence, n est un entier supérieur ou égal à 3,
et dans laquelle les coefficients $a_i$, $b_i$ sont choisis de telle façon que la fonction de transfert (T(f)), ayant pour entrée l'effort résultant appliqué au mécanisme d'orientation (10, 11) et pour sortie le couple-volant, présente une courbe de Bode représentative suivant laquelle :

- dans une plage de fréquence (f) comprise entre 0 et ladite valeur de seuil (S), le gain (G) varie avec la fréquence entre une valeur basse ($G_1$) et une valeur haute de gain ($G_2$) constantes,
- pour des fréquences (f) supérieures à ladite valeur de seuil (S), le gain (G) varie avec la fréquence (f), en restant inférieur à une valeur maximale variant elle-même linéairement avec la fréquence de façon décroissante, selon une pente (P) prédéterminée, non nulle, à partir de ladite valeur haute ($G_2$).

5. Dispositif suivant la revendication 4, **caractérisé en ce que** les coefficients $a_i$, $b_i$ sont choisis de telle façon que la fonction de transfert (T(f)), ayant pour entrée l'effort résultant appliqué au mécanisme d'orientation (10, 11) et pour sortie le couple-volant, présente une courbe de Bode représentative de phase suivant laquelle :

- dans la plage de fréquence (f) comprise entre 0 et ladite valeur de seuil (S), la phase ($\theta$) varie avec la fréquence (f) entre une valeur basse de phase ($\theta_1$) strictement inférieure à 0 et une valeur haute de phase ($\theta_2$), inférieure ou égale 0, de préférence nulle,
- pour des fréquences (f) supérieures à ladite valeur de seuil (S), la phase ($\theta$) reste inférieure à ladite valeur haute de phase ($\theta_2$).

6. Ensemble de direction de véhicule automobile, comprenant un arbre de direction (4), un dispositif (12) d'assistance électrique selon l'une quelconque des revendications 1 à 5, relié à l'arbre de direction (4) de façon à fournir une assistance au braquage du volant (2) en exerçant sur l'arbre de direction (4) un couple d'assistance, un mécanisme d'orientation (10, 11) relié à l'arbre de direction (4) et au dispositif d'assistance (2), et par l'intermédiaire duquel est transmis un effort résultant de braquage à des roues directrices (9).

7. Véhicule automobile, **caractérisé en ce qu'**il comporte un ensemble de direction suivant la revendication 6.

**Claims**

1. Motor vehicle electric power steering device, comprising:

- an electric motor (15), the output shaft (18) of which is designed to be connected to the steering shaft (4) of the vehicle, such as to provide assistance in locking the steering wheel (2) by exerting assistance moment on the steering shaft (4), a resulting locking force being transmitted to the guiding wheels by means of an orientation mechanism (10, 11);
- a first sensor (21) measuring a first vehicle running parameter ($P_1$) which is indicative of the steering wheel moment applied to the steering shaft (4);
- a second sensor (22) measuring a second vehicle running and/or state parameter ($P_2$); and
- a calculation unit (30) having at least one first and one second input, which are connected respectively to the first (21) and the second (22) sensors, and having an output which is connected to the electric motor (15) and supplying to the latter an assistance moment order signal (C) which is representative of a value calculated by applying pre-recorded command laws to the input values,

**characterised in that** it additionally comprises means (31) respectively for attenuating and amplifying selectively, in predetermined frequency ranges, the vibratory phenomena involved in the steering wheel moment, the said means (31) functioning by processing of the signal transmitted to the first input of the calculation unit (30).

2. Device according to claim 1, **characterised in that** the said means (31) are designed to attenuate the vibratory phenomena involved in the steering wheel moment at frequencies which are greater than a predetermined threshold value (S).

3. Device according to claim 2, **characterised in that** the said threshold value (S) is between 8 and 14 Hz, and is preferably 10 Hz.

4. Device according to claim 2 or claim 3, **characterised in that** the said means (31) comprise a signal processing circuit (31), the input of which is connected to the first sensor (21) and the output of which is connected to the first input of the calculation unit (16), the said circuit applying to the input signal which is representative of the steering wheel moment value measured, a transfer function with the form

$$ H\,(f)\ =\ \frac{\displaystyle\sum_{i=n}^{i=n} b_i f^i}{\displaystyle\sum_{i=n}^{i=n} a_i f^i} $$

wherein f is the frequency, n is a whole number equal to 3 or more,
and wherein the coefficients $a_i$, $b_i$ are selected such that the transfer function (T(f)) which has as input the resulting force applied to the orientation mechanism (10, 11) and has as output the steering wheel moment, has a representative Bode curve according to which:

- in a frequency range (f) between 0 and the said threshold value (S), the gain (G) varies with the frequency between a low value ($G_1$) and a high constant gain value ($G_2$);
- for frequencies (f) which are greater than the said threshold value (S), the gain (G) varies with the frequency (f), whilst remaining lower than a maximal value, which itself varies linearly with the frequency in a decreasing manner, according to a predetermined non-zero gradient (P), from the said high value ($G_2$).

5. Device according to claim 4, **characterised in that** the coefficients $a_i$, $b_i$ are selected such that the transfer function (T(f)), which has as input the resulting force applied to the orientation mechanism (10, 11) and has as output the steering wheel moment, has a Bode curve representative of the following phase, wherein:

- in the frequency range (f) between 0 and the said threshold value (S), the phase ($\theta$) varies with the frequency (f) between a low phase value ($\theta_1$) which is strictly less than 0, and a high phase value ($\theta_2$) of 0 or less, and preferably zero; and
- for frequencies (f) which are greater than the said threshold value (S), the phase ($\theta$) remains lower than the said high phase value ($\theta_2$).

6. Motor vehicle steering assembly, comprising a steering shaft (4), an electric power steering device (12) according to any one of claims 1 to 5, which is connected to the steering shaft (4) such as to provide assistance in locking the steering wheel (2) by exerting assistance moment on the steering shaft (4), and a locking mechanism (10, 11) which is connected to the steering shaft (4) and to the assistance device (2), and by means of which a resulting locking force is transmitted to the guiding wheels (9).

**7.** Motor vehicle, **characterised in that** it comprises a steering assembly according to claim 6.

**Patentansprüche**

**1.** Elektrische Servolenkeinrichtung für ein Kraftfahrzeug, umfassend:

- einen Elektromotor (15) dessen Abtriebswelle (18) dazu bestimmt ist, mit der Lenkwelle (4) des Fahrzeugs verbunden zu werden, so dass sie den Lenkeinschlag des Lenkrads (2) unterstützt, indem sie auf die Lenkwelle (4) ein Hilfsmoment ausübt, wobei eine resultierende Lenkeinschlagskraft mittels eines Ausrichtungsmechanismus (10, 11) auf gelenkte Räder übertragen wird,
- einen ersten Sensor (21), der einen ersten Betriebsparameter ($P_1$) des Fahrzeugs misst, der für das auf die Lenkwelle (4) wirkende Lenkradmoment bezeichnend ist,
- einen zweiten Sensor (22), der einen zweiten Betriebsparameter ($P_2$) und/oder Zustandsparameter des Fahrzeugs misst, und
- ein Rechenwerk (30), das wenigstens einen ersten und einen zweiten Eingang aufweist, die mit dem ersten (21) beziehungsweise mit dem zweiten (22) Sensor verbunden sind, und das einen Ausgang aufweist, der mit dem Elektromotor (15) verbunden ist und an diesen ein Sollwertsignal des Hilfsmoments (C) liefert, das für einen Wert steht, der berechnet wird, indem man auf die Eingangswerte vorgespeicherte Vorgabefunktionen anwendet,

**dadurch gekennzeichnet, dass** sie darüber hinaus Mittel (31) umfasst, um auf selektive Weise innerhalb von vorbestimmten Frequenzbereichen die auf das Lenkradmoment wirkenden Schwingungsphänomene abzuschwächen beziehungsweise zu verstärken, wobei die Mittel (31) durch Verarbeitung des Signals, das an den ersten Eingang des Rechenwerkes (30) geliefert wird, funktionieren.

**2.** Vorrichtung nach Anspruch 1, **dadurch gekennzeichnet, dass** die Mittel (31) dazu geeignet sind, die auf das Lenkradmoment wirkenden Schwingungsphänomene in Frequenzen über einem vorbestimmten Schwellenwert (S) abzuschwächen.

**3.** Vorrichtung nach Anspruch 2, **dadurch gekennzeichnet, dass** dieser Schwellenwert (S) zwischen 8 und 14 Hz liegt und vorzugsweise 10 Hz beträgt.

**4.** Vorrichtung nach Anspruch 2 oder 3, **dadurch gekennzeichnet, dass** die Mittel (31) eine Signalverarbeitungsschaltung (31) umfassen, deren Eingang mit dem ersten Sensor (21) verbunden ist, und der Ausgang mit dem ersten Eingang des Rechenwerks (16) verbunden ist, wobei die Schaltung auf das Eingangssignal, das für den gemessenen Wert des Lenkradmoments steht, eine Übertragungsfunktion der folgenden Form anwendet:

$$H(f) = \frac{\sum\limits_{i=n}^{i=n} b_i f^i{}_{10}}{\sum\limits_{i=n}^{i=n} a_i f^i},$$

in der f die Frequenz ist, n eine Ganzzahl größer oder gleich 3 ist,
und in der die Koeffizienten $a_i$, $b_i$ so gewählt sind, dass die Übertragungsfunktion (T(f)), die als Eingang die resultierende Kraft hat, die auf den Ausrichtungsmechanismus (10, 11) angewendet wird, und als Ausgang das Lenkradmoment hat, eine repräsentative Bode-Kurve aufweist, gemäß der:

- in einem Frequenzbereich (f) zwischen 0 und dem Schwellenwert (S) die Verstärkung (G) mit der Frequenz zwischen einem unteren konstanten Verstärkungswert ($G_1$) und einem oberen konstanten Verstärkungswert ($G_2$) variiert,
- für Frequenzen (f) über dem Schwellenwert (S) die Verstärkung (G) mit der Frequenz (f) variiert, wobei sie unter einem Maximalwert bleibt, der selbst linear mit der Frequenz variiert, und zwar abnehmend, gemäß einer vorbestimmten Neigung (P), nicht null, ausgehend von dem hohen Wert ($G_2$).

5. Vorrichtung nach Anspruch 4, **dadurch gekennzeichnet, dass** die Koeffizienten $a_i$, $b_i$ so gewählt sind, dass die Übertragungsfunktion (T(f)), die als Eingang die resultierende Kraft hat, die auf den Ausrichtungsmechanismus (10, 11) angewendet wird, und als Ausgang das Lenkradmoment hat, eine repräsentative Bode-Kurve einer Phase aufweist, gemäß der:

   - in dem Frequenzbereich (f) zwischen 0 und dem Schwellenwert (S) die Phase ($\theta$) mit der Frequenz (f) zwischen einem unteren Phasenwert ($\theta_1$), der streng unter 0 liegt, und einem oberen Phasenwert ($\theta_2$), kleiner oder gleich 0, vorzugsweise null, variiert,
   - für Frequenzen (f) über dem Schwellenwert (S) die Phase ($\theta$) unter dem hohen Phasenwert ($\theta_2$) bleibt.

6. Lenkanordnung für ein Kraftfahrzeug, umfassend eine Lenkwelle (4), eine elektrische Servolenkeinrichtung (12) gemäß einem der Ansprüche 1 bis 5, die so mit der Lenkwelle (4) verbunden ist, dass sie den Lenkeinschlag des Lenkrads (2) unterstützt, indem sie auf die Lenkwelle (4) ein Hilfsmoment ausübt, einen Ausrichtungsmechanismus (10, 11), der mit der Lenkwelle (4) und der Servolenkeinrichtung (2) verbunden ist, und mittels dessen eine resultierende Lenkeinschlagskraft auf gelenkte Räder (9) übertragen wird.

7. Kraftfahrzeug, **dadurch gekennzeichnet, dass** es eine Lenkanordnung nach Anspruch 6 aufweist.

FIG.1

FIG.2

FIG.3